# DEMANDE DE BREVET EUROPEEN

(11) **EP 4 559 775 A1**
(43) Date de publication de la demande: **28.05.2025**
(21) Numéro de dépôt: 24213617.4
(22) Date de dépôt: 18.11.2024
(51) Int. Cl.: B61D 19/00, B60J 5/06, E05B 83/36

(54) **MODULE MULTIFONCTIONNEL A ROBUSTESSE AMELIOREE POUR PORTE LOUVOYANTE COULISSANTE, ET VEHICULE AINSI EQUIPE**

(30) Priorité: 21.11.2023 FR 2312789
(71) Demandeur: Faiveley Transport Tours, 37701 Saint Pierre des Corps Cedex (FR)
(72) Inventeur: VAUTIER, Fabien, 37270 Véretz (FR); BRION, Florian, 37390 Notre-Dame-d'Oé (FR)
(74) Mandataire: IXAS Conseil

(57) **Abrégé**

Ce module comprend un carter (1) fixé sur une poutre fixe (300) du mécanisme d'entraînement de ladite porte, un arbre (2, 3) monté sur ce carter, comprenant un premier (2) et un deuxième (3) éléments d'arbres coaxiaux, présentant un unique degré de liberté en rotation autour de leur axe commun, des moyens (9, 90) de condamnation, ayant une configuration active dans laquelle ils empêchent le passage de la porte de sa position fermée à sa position ouverte, ainsi qu'une configuration inactive, ainsi que des moyens (50, 51, 60) d'ouverture d'urgence, ayant une configuration active dans laquelle ils permettent de déverrouiller le mécanisme de verrouillage de la porte, ainsi qu'une configuration inactive.

Selon l'invention le module comprend des moyens (4, 22, 55) de désactivation, aptes à maintenir les moyens d'ouverture d'urgence inactifs lorsque les moyens de condamnation sont actifs. L'invention permet donc d'éviter une situation dans laquelle, pour une porte condamnée, un utilisateur reste en capacité d'actionner le déverrouillage d'urgence. Par conséquent toute ouverture d'urgence intempestive est évitée, ce qui permet de conserver l'intégrité mécanique de la porte pendant la durée de l'état condamné.

## Description

### Domaine technique de l'invention

La présente invention concerne le domaine des portes louvoyantes coulissantes pour des véhicules de transport, notamment du type train, tramway ou encore trolleybus. L'invention vise plus spécifiquement un module, destiné à équiper de telles portes, qui est susceptible de remplir différentes fonctions liées à la mise en oeuvre de ces portes, notamment en cas d'urgence. L'invention vise en particulier un tel module, dont l'intégrité mécanique peut être conservée quelles que soient les conditions opérationnelles qu'il est susceptible de rencontrer.

### Etat de la technique

Il est connu d'équiper les véhicules de transport au moyen de portes louvoyantes coulissantes dont le mouvement présente une phase d'ouverture, dans laquelle le mouvement de translation des vantaux le long de leur suspension, dans le sens de l'ouverture, est conjugué avec un mouvement d'ensemble de la suspension des vantaux, dans le sens latéral vers l'extérieur du véhicule. Ensuite, lorsque la position latérale est atteinte, les vantaux continuent à se déplacer longitudinalement jusqu'à atteindre l'ouverture voulue. Ce mouvement, effectué en sens inverse pour fermer la porte, permet notamment d'assurer une parfaite étanchéité lorsque la porte est fermée.

Dans l'état de la technique, on prévoit d'équiper ces portes louvoyantes coulissantes avec des dispositifs mécaniques, permettant d'assurer diverses fonctionnalités en cas d'urgence.

Tout d'abord, ces portes sont munies d'un dispositif autorisant une fonction d'ouverture d'urgence. En d'autres termes, l'actionnement de ce dispositif commande l'ouverture forcée de la porte, notamment en cas de perception d'un danger par les utilisateurs. A cet effet, on connaît une solution faisant appel à un câble de déverrouillage, susceptible d'être actionné par un utilisateur grâce à une poignée de secours. Ce câble entraîne alors un doigt, susceptible de déverrouiller le mécanisme de verrouillage préalablement enclenché.

Par ailleurs, ces portes louvoyantes coulissantes sont également pourvues d'un dispositif assurant leur condamnation, notamment en cas de dysfonctionnement des moyens mécaniques normalement dédiés à cet effet. Dans ces conditions tout déplacement de la porte, de sa position fermée vers sa position ouverte, est empêché. Ce type de dispositif peut classiquement faire appel à un organe d'actionnement, en général placé dans le vantail de la porte, lequel empêche le mouvement de louvoiement grâce à un pêne inséré dans une gâche, elle-même fixée sur la caisse du véhicule.

Dans l'art antérieur ces deux dispositifs, assurant respectivement l'ouverture d'urgence et la condamnation, sont habituellement indépendants. On connait certes des solutions, dans lesquels ces dispositifs sont implantés à proximité mutuelle. Quoi qu'il en soit, leur mise en oeuvre est dissociée, à savoir qu'aucun élément mécanique, intervenant dans la réalisation de l'une de ces fonctions, n'intervient dans la réalisation de l'autre de ces fonctions.

Afin d'améliorer cet état de la technique la demanderesse a proposé, dans FR-3 061 227, un module dit multifonctionnel susceptible de remplir à la fois une fonction de condamnation de la porte ainsi qu'une fonction supplémentaire d'ouverture d'urgence de cette même porte. Sur le plan structurel ce module comprend un arbre, formé d'un essieu et d'un moyeu dont chacun est respectivement dédié à la mise en oeuvre de l'une des fonctions ci-dessus. Ainsi la mise en rotation du moyeu autorise notamment une ouverture d'urgence de la porte, alors que la mise en rotation de l'essieu permet notamment une condamnation de cette porte.

Cette solution s'est révélée satisfaisante, en ce qu'elle apporte de nombreux avantages vis-à-vis de l'état de la technique présenté ci-dessus. Etant donné que ces deux éléments d'arbre sont disposés à proximité spatiale immédiate, cela confère une compacité très satisfaisante au module selon FR-3 061 227. Par ailleurs, la mise en oeuvre de ce module est particulièrement simple pour l'utilisateur. Enfin ce module est susceptible de remplir des fonctions supplémentaires, en dehors de l'ouverture d'urgence et de la condamnation précitées.

La solution mécanique, présentée dans FR-3 061 227, s'accompagne cependant d'inconvénients spécifiques dans certaines conditions opérationnelles. Dans ce cas, l'intégrité de la porte louvoyante coulissante équipée de ce module multifonctionnel n'est alors pas totalement préservée. En effet cette porte est susceptible de subir des déformations voire des casses mécaniques, pouvant engendrer des frais substantiels de réparation ainsi que des arrêts intempestifs dans l'exploitation du matériel.

Compte tenu de ce qui précède, un objectif de la présente invention est de réaliser un module qui, tout en assurant les mêmes fonctions de base que celui décrit dans FR 3 061 227, apporte une robustesse améliorée de la porte par rapport à ce module antérieur.

### Objets de l'invention

Selon l'invention, au moins un des objectifs ci-dessus est atteint au moyen d'un module multifonctionnel (I) pour porte louvoyante-coulissante d'un véhicule de transport, notamment pour porte de tramway, trolleybus ou train, ladite porte étant mobile entre des positions ouverte et fermée et ledit véhicule comportant un mécanisme de verrouillage de ladite porte dans sa position fermée,
ce module comprenant :
   - un carter (1), adapté pour être fixé sur une première pièce de structure solidaire du bâti du véhicule, notamment sur une poutre fixe (300) du mécanisme d'entraînement de ladite porte,
   - un arbre (2, 3) monté sur ce carter, cet arbre comprenant un premier élément d'arbre (2) et un deuxième élément d'arbre (3), coaxial avec ledit premier élément d'arbre, chaque élément d'arbre étant monté rotatif autour de son axe principal (A2) sur le carter, lesdits éléments d'arbre présentant un unique degré de liberté en rotation mutuel autour de leur axe principal commun, formant axe principal de l'arbre,
   - des premiers moyens (9, 90), dits de condamnation, aptes à coopérer avec le premier élément d'arbre (2), lesdits moyens de condamnation étant aptes à adopter une configuration dite active dans laquelle ils empêchent le passage de la porte de sa position fermée à sa position ouverte, ainsi qu'une configuration dite inactive
   - des deuxièmes moyens (50, 51, 60), dits d'ouverture d'urgence, aptes à coopérer avec le deuxième élément d'arbre (3), lesdits moyens d'ouverture d'urgence étant aptes à adopter une configuration dite active dans laquelle ils permettent de déverrouiller ledit mécanisme de verrouillage de ladite porte, ainsi qu'une configuration dite inactive,
ce module étant caractérisé en ce qu'il comprend en outre des moyens (4, 22, 55) de désactivation qui sont aptes à maintenir les moyens d'ouverture d'urgence (50, 51, 60) dans leur configuration inactive lorsque les moyens de condamnation (9, 90) se trouvent dans leur configuration active.

Selon d'autres caractéristiques de l'invention :
- les moyens de désactivation sont aptes à provoquer le passage des moyens d'ouverture d'urgence (50, 51, 60), depuis leur configuration active vers leur configuration inactive, sous l'effet du passage des moyens de condamnation (9, 10) de leur configuration inactive vers leur configuration active.
- les moyens d'ouverture d'urgence comprennent au moins une première poulie (50, 51), dite de commande, solidaire au moins en rotation dudit deuxième élément d'arbre (3), chaque poulie de commande étant associée à un organe de commande propre à être actionné par un utilisateur, et dans lequel les moyens de désactivation (4, 22, 55) comprennent un organe de blocage (4) d'au moins une poulie de commande (50), cet organe de blocage étant mobile entre une position active de blocage dans laquelle il empêche la rotation de la poulie de commande, ainsi qu'une position inactive de libre rotation dans laquelle il ne s'oppose pas à la rotation de cette poulie de commande.
- les moyens de désactivation (4, 22, 55) comprennent une encoche (55) ménagée dans au moins une poulie de commande (50), ledit organe de blocage (4) étant apte à pénétrer dans ladite encoche dans la position active de blocage.
- les moyens de désactivation (4, 22, 55) comprennent une came de mobilisation (22) de l'organe de blocage (4), qui est apte à déplacer l'organe de blocage entre ses positions respectivement active et inactive.
- le module comprend en outre des moyens de rappel, notamment un ressort de rappel (7), permettant de rappeler l'organe de blocage (4) depuis sa position active de blocage vers sa position inactive de libre rotation.
- l'organe de blocage (4) est mobile par rapport au carter (1) à la manière d'un balancier, l'organe de blocage comprenant une première extrémité (42) apte à être mobilisée par la came de mobilisation (22), ainsi qu'une extrémité opposée (41) apte à pénétrer dans l'encoche (55) de la poulie de commande, ces extrémités étant disposées de part et d'autre de l'axe de rotation (A4) de l'organe de blocage par rapport au carter.
- le carter comprend un flasque (13) dit extérieur, une plage (14) prolongeant le flasque extérieur en direction de l'arbre (2, 3), ainsi qu'un rebord (15) formant palier pour l'organe de blocage.
- l'organe de blocage (4) est solidaire d'un pion (17) monté à rotation dans le rebord, le ressort de rappel (7) étant en partie enroulé autour dudit pion.
- l'un desdits premier et deuxième éléments d'arbre est monté en position centrale sur le carter et forme un essieu (2), alors que l'autre desdits premier et deuxième éléments d'arbre est creux et forme un moyeu (3), monté à la périphérie dudit essieu.
- les moyens d'ouverture d'urgence comprennent en outre au moins une autre poulie (60), dite de transmission, solidaire au moins en rotation dudit deuxième élément d'arbre (3), ladite poulie de transmission étant propre à actionner un élément de déverrouillage, de type câble, propre à déverrouiller ledit mécanisme de verrouillage de ladite porte.

Ces caractéristiques additionnelles peuvent être mises en oeuvre avec l'objet principal ci-dessus, individuellement ou en combinaisons quelconques, techniquement compatibles.

L'invention a également pour objet un véhicule de transport, notamment du type train, tramway ou encore trolleybus, comprenant une caisse, au moins une porte louvoyante coulissante, un ensemble d'entraînement de ladite porte, ainsi qu'au moins un module multifonctionnel (I) tel que ci-dessus.

### Description des figures

L'invention va être décrite ci-après, en référence aux dessins annexés, donnés uniquement à titre d'exemples non limitatifs, dans lesquels :
[Fig. 1] est une vue en perspective, illustrant un module multifonctionnel conforme à l'invention, ainsi qu'une porte louvoyante coulissante d'un véhicule de transport qui en est équipée.
[Fig. 2] est une vue en perspective, illustrant sous un premier angle ce module multifonctionnel dans sa position pour laquelle la condamnation de la porte est activée.
[Fig. 3] est une vue en perspective, illustrant sous un autre angle ce module multifonctionnel dans sa position de repos correspondant un service normal, c'est-à-dire pour laquelle la porte est non condamné.
[Fig. 4] est une vue en perspective illustrant, à plus grande échelle et sous un premier angle, une partie d'un carter appartenant au module des figures précédentes ainsi qu'un levier dit de blocage, monté à rotation sur ce carter.
[Fig. 5] est une vue en perspective analogue à la figure 4, illustrant sous un autre angle cette partie de carter et ce levier de blocage.

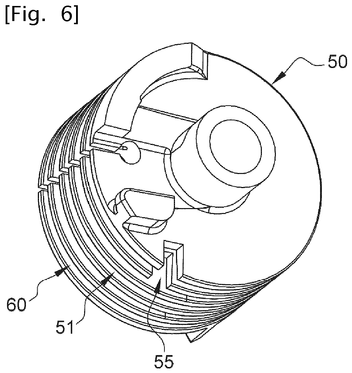

[Fig. 6] est une vue en perspective, illustrant de façon isolée un jeu de poulies équipant le module conforme à l'invention.
[Fig. 7] est une vue en perspective illustrant, sous le même angle qu'à la figure 3, le module multifonctionnel dans une configuration dite active de condamnation combinée à une configuration dite inactive de déverrouillage d'urgence.
[Fig. 8] est une vue en perspective, analogue à la figure 4, illustrant, le levier dans sa position de blocage du jeu de poulies.
[Fig. 9] est une vue en perspective, analogue à la figure 5, illustrant le levier dans sa position de blocage du jeu de poulies.

### Les références numériques suivantes sont utilisées dans la présente description :

| | | | |
|---|---|---|---|
| I : | Module | 200 : | Vantaux |
| 300 : | Poutre fixe | 400 : | Poutre mobile |
| F400 F'400 : | Déplacements de 400 | Int/Ext : | Intérieur/Extérieur du véhicule |
| 1 : | Carter | 10 : | Corps de 1 |
| 11 : | Platine | 12,13 : | Flasques de 1 |
| 14 : | Plage | 110 : | Pied |
| 17 : | Pion | 15 : | Rebord |
| 18 : | Tête du pion | 19 : | Clavette |
| 2 : | Essieu | 21,21' : | Doigts de 2 |
| 22 : | Came portée par 2 | 23 : | Tronçon annulaire de 22 |
| 24 : | Excentrique de 22 | 3 : | Moyeu |
| 4 : | Levier | 40 : | Lame de 4 |
| 41 : | Cale de blocage de 4 | 42 : | Patte de 4 |
| 50,51 et 60 : | Poulies | 52,53 et 61 : | Câbles des poulies |
| 55 | : Encoche de 50 | Ax : | axe de X (1, 2, 4, 17) |
| 7 : | Ressort entourant 17 | 71 : | Enroulement de 7 |
| 72,73 | : Extrémités de 7 | 140 : | Entaille de 14 |
| 44 : | Entaille de 4 | 75 : | Ressort entourant 3 |
| 76 : | Enroulement de 75 | 77,78 : | Extrémités de 75 |
| 8 : | Poignée | 9 : | Pièce rotative |
| 91,92 : | Régions actives de 9 | 93,94 : | Orifices de 9 |
| 90 : | Elément de butée | 211 : | Poussoir |
| 212 : | Emplacement d'une bille | Fx : | déplacements de X (2, 9, 22, 41, 42) |

### Description détaillée

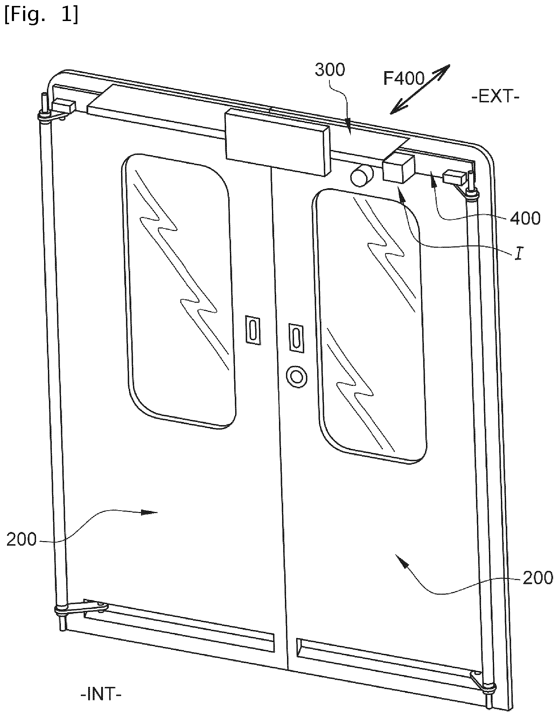

Les figures annexées illustrent un module I destiné à équiper une porte louvoyante coulissante, par exemple du type de celle décrite dans FR-3 003 887 ainsi que, de manière plus sommaire, dans FR-3 061 227. Cette porte, qui est représentée de manière très simplifiée sur la figure 1, est destinée à équiper un véhicule de transport, tel que notamment un tramway, un trolleybus, ou encore un train. Cette porte est connue en tant que telle, de sorte qu'elle ne sera pas décrite en détail dans ce qui suit.

Elle se compose notamment d'au moins un vantail, en l'occurrence de deux vantaux 200 dans l'exemple représenté, ainsi que d'un mécanisme permettant le déplacement de chaque vantail. Un tel mécanisme comporte en particulier une poutre fixe 300 solidaire du bâti, ainsi qu'une poutre mobile 400 solidaire de la suspension des vantaux 200. Cette poutre mobile 400 est apte à louvoyer par rapport à la porte fixe, selon la double flèche F400 à la figure 1, grâce à des moyens moteurs non représentés. Sur l'ensemble des figures, les lettres Int et Ext désignent respectivement l'intérieur et l'extérieur du véhicule. On va maintenant décrire plus en détail le module I, conforme à l'invention. Dans ce qui suit on va faire référence au module conforme à l'enseignement de FR-3 061 227, en insistant notamment sur les différences structurelles et fonctionnelles entre le module I de l'invention et ce module antérieur.

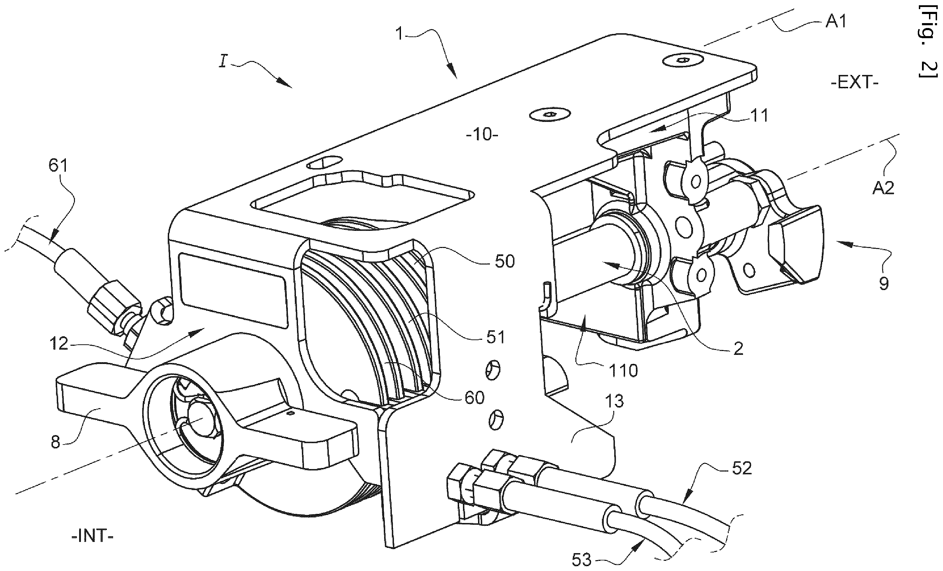

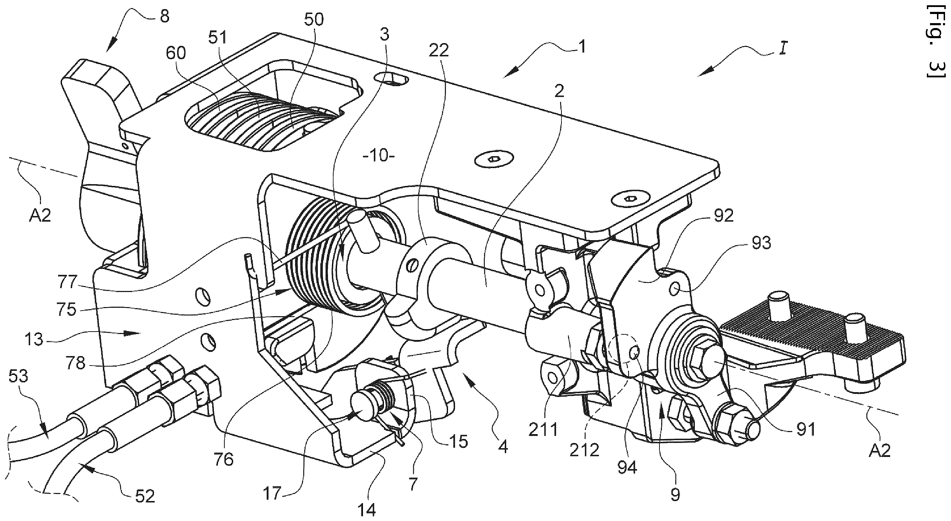

En référence notamment aux figures 2 et 3, le module I conforme à l'invention comprend tout d'abord un carter, désigné dans son ensemble par la référence 1. Ce carter possède un corps allongé 10, formant un voile, dont la dimension principale s'étend transversalement par rapport au véhicule. Cette dimension principale définit l'axe principal A1 du module, dont on notera qu'il est globalement perpendiculaire à la direction principale du véhicule, correspondant à l'avancée de ce dernier. Deux flasques 12 et 13, mutuellement perpendiculaires, s'étendent vers le bas à partir de la face inférieure du voile 10, tournée vers l'intérieur du véhicule. Ces flasques sont dénommées respectivement intérieur 12 et extérieur 13. Le carter 1 comprend en outre une platine 11, sur laquelle est fixé le voile 10, de préférence de manière amovible. Cette platine 11 s'étend à partir d'un pied 110, lui-même solidarisé sur la poutre fixe 300.

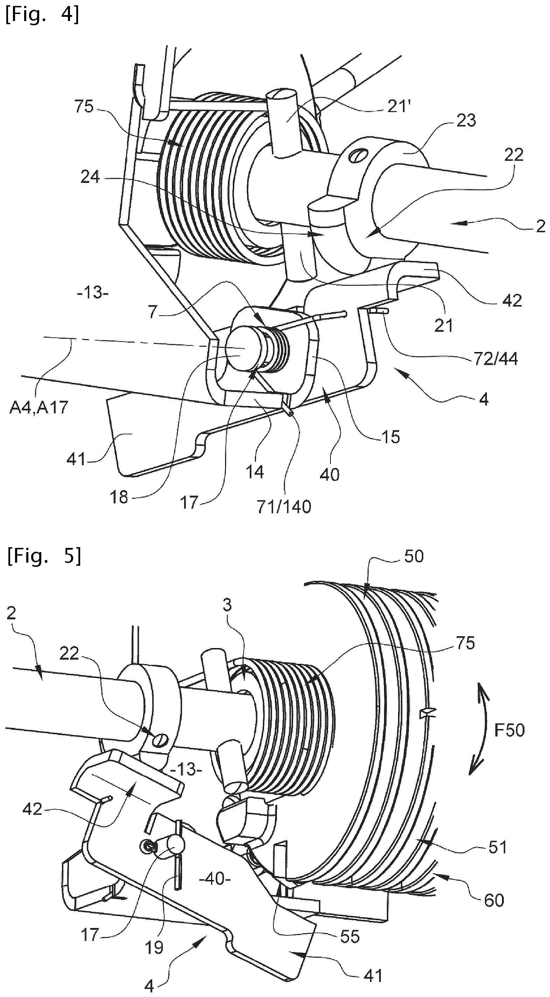

Les caractéristiques listées au paragraphe précédent sont communes, à la fois au module I de l'invention et au module conforme à l'enseignement de FR-3 061 227. En revanche le module I diffère de l'art antérieur en ce que le flasque extérieur 13 est prolongé par une plage 14 s'étendant horizontalement en direction de l'essieu décrit ci-après (voir et, plus particulièrement, figure 4). Cette plage 14 est terminée par un rebord 15, faisant saillie vers le haut en étant donc sensiblement parallèle au flasque 13. Ce rebord 15 est creusé d'un orifice traversant, de manière à assurer une fonction de palier pour un pion 17. En service, ce pion est susceptible d'entrer en rotation par rapport au palier 15, selon l'axe A17.

Du côté du rebord 15 tourné vers le flasque 13, le pion 17 possède une tête 18 de plus grand diamètre, permettant la retenue d'un ressort 7 intercalé entre cette tête et ce rebord. Du côté du rebord opposé au flasque, le pion 17 est solidarisé à un levier 4, à la fois en rotation et en translation. A cet effet, une clavette 19 pénètre dans un trou diamétral de ce pion, étant entendu qu'on pourrait prévoir tout autre moyen équivalent.

Comme le montrent notamment les figures 4 et 5, le levier 4 comprend une lame principale allongée 40, terminée par une extrémité 41. Comme cela sera détaillé ci-après, cette dernière forme une cale de blocage, destinée à coopérer avec une poulie équipant le module conforme à l'invention. À l'opposé de l'extrémité 41, la lame 40 est prolongée par une patte d'actionnement 42, dont la fonction sera décrite dans ce qui suit. Étant donné que le levier 4 est solidaire du pion 17, il est également libre d'entrer en rotation par rapport au palier 15 autour d'un axe noté A4, lequel est confondu avec celui A17 mentionné ci-dessus. La cale 41 et la patte 42 sont disposées de part et d'autre de l'axe de rotation de sorte que, comme on le verra ci-après, le levier peut adopter un mouvement de balancier.

Le ressort 7 comprend un enroulement 70, lequel entoure la région du pion 17 entre le rebord 15 et la tête 18. Une première extrémité 71 de ce ressort pénètre dans une entaille 140 ménagée dans la plage 14, alors que son extrémité opposée 72 pénètre dans une entaille 44 réalisée dans le levier 4. Comme on le verra dans ce qui suit, ce ressort 7 est apte à rappeler le levier dans sa position 4 dite de libre rotation.

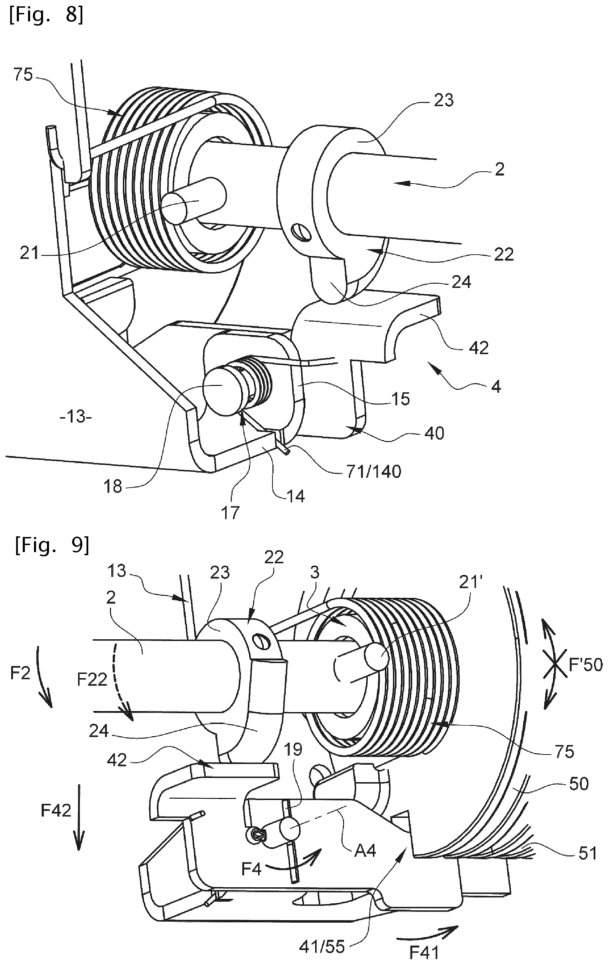

Tout comme le module antérieur conforme à FR-3 061 227, le module de l'invention I comprend en outre un arbre principal formé de deux éléments d'arbre, à savoir un essieu central plein 2 visible entre autres sur les figures 2 et 3, ainsi qu'un moyeu périphérique 3 plus particulièrement visible sur les figures 5 et 9. Cet essieu, solidaire en translation du flasque 12 et du pied 110, présente un unique degré de liberté en rotation par rapport à ce flasque 12 et ce pied 110, autour de son axe principal A2 parallèle à A1.

### Le moyeu 3, qui est monté autour de la partie de l'essieu 2 adjacente au flasque 12, est solidaire de l'essieu en translation selon deux sens opposés. A cet effet, le flasque 12 bloque la première extrémité du moyeu dans un premier sens, alors que des doigts radiaux 21 et 21' équipant l'essieu bloquent la deuxième extrémité de ce moyeu dans l'autre sens. Ce moyeu présente un unique degré de liberté en rotation par rapport à l'essieu, autour de leur axe principal commun. Le moyeu 3 est par ailleurs entouré par l'enroulement 76 d'un ressort 75, dont une première extrémité 77 est solidaire du carter 1, et dont l'autre extrémité 78 est solidaire de la poulie 50.

L'essieu 2 du module conforme à l'invention est en outre équipé d'une came 22 dite de désactivation (voir notamment figures 4, 5, 8 et 9), qui constitue une pièce distinctive en regard du module antérieur selon FR-3 061 227. Cette came, qui est placée entre le pied 110 et les doigts 21 21', est solidarisée par tous moyens appropriés sur l'essieu 2. Elle comprend un tronçon d'anneau 23 de section constante, formant portion amincie, ainsi qu'une excentrique 24 de plus grande section, formant portion renflée. Comme cela sera décrit dans ce qui suit, cette came est apte à faire pivoter le levier 4 autour de son axe A4.

La première extrémité du moyeu, adjacente au flasque intérieur 12, supporte plusieurs poulies 50, 51 et 60. Dans l'exemple illustré ces trois poulies sont solidaires les unes des autres, tout en étant également solidaires du moyeu 3. On retrouve tout d'abord deux poulies de commande 50 et 51, dites menantes, dont chacune est solidaire d'un câble respectif 52 et 53, tous deux représentés de façon schématique. Ces câbles sont chacun reliés à des organes de commande non représentés, tels des poignées, prévus respectivement sur le côté intérieur et le côté extérieur de la porte. Par ailleurs on retrouve une poulie de transmission 60, dite menée, qui est solidaire d'un câble supplémentaire 61 représenté de façon schématique. Ce dernier est apte à coopérer avec un dispositif non représenté, de type connu en soi, permettant de déverrouiller la porte.

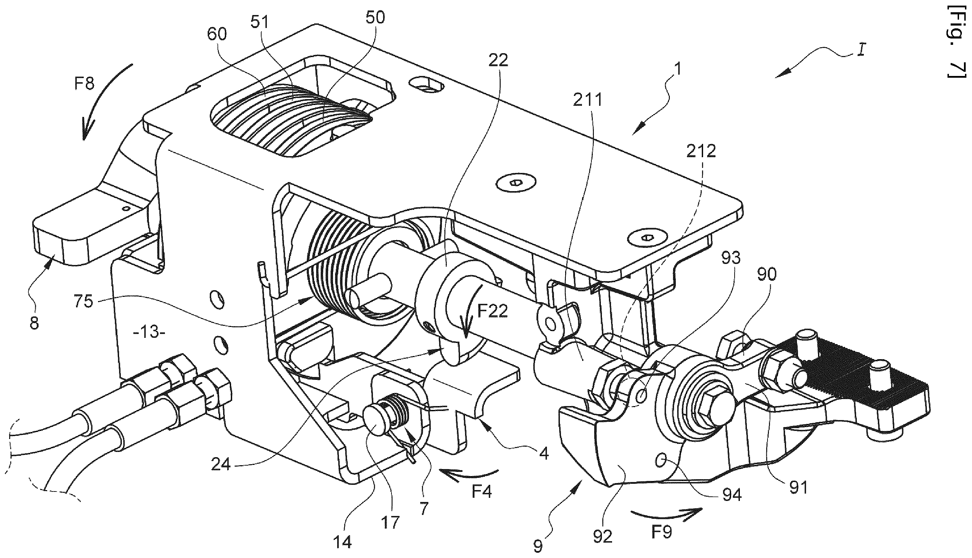

Une caractéristique distinctive de la poulie de commande 50, vis-à-vis de l'art antérieur matérialisé par FR-3 061 227, est plus particulièrement visible sur la figure 7. Cette poulie 50 est en effet creusée d'une encoche 55, permettant la réception de la cale de blocage 41 du levier 4. Dans l'exemple illustré seule la poulie 50, adjacente à ce levier, est pourvue d'une telle encoche. À titre de variante on peut prévoir qu'au moins une autre poulie, comme par exemple celle 51, possède une encoche similaire autorisant la réception de la cale de blocage précitée.

On va maintenant faire référence à différents éléments appartenant au module I, lesquels sont analogues dans leur structure leur fonction à ceux conformes à l'enseignement de FR-3 061 227. Ces différents éléments, qui ne font pas l'objet de la présente invention, vont donc être décrits de façon succincte.

A son extrémité intérieure, tournée vers le flasque 12, l'essieu 2 est fixé à une poignée 8, permettant sa mise en rotation par un utilisateur présent dans le véhicule. A son extrémité extérieure opposée, tournée vers le flasque 13, l'essieu 2 est par ailleurs fixé à une pièce rotative 9 qui possède deux régions renflées 91 et 92, globalement diamétralement opposées l'une de l'autre. La première région 91 supporte un élément de butée 90 (voir notamment figure 8), qui s'étend en direction de l'intérieur du véhicule, sensiblement selon l'axe A2. Par ailleurs, la région opposée 92 de cette pièce rotative 9 est creusée de deux orifices d'indexation 93 et 94 (voir figures 3 et 8).

Différentes pièces fonctionnelles supplémentaires équipent par ailleurs le carter du module. On retrouve tout d'abord un poussoir 211 de type connu en soi (voir figure 3), qui est monté sur le carter. Ce poussoir est muni d'un ressort apte à repousser une bille en direction de la pièce rotative 9, à savoir vers l'extérieur du véhicule. L'emplacement de cette bille, laquelle n'est pas représentée, est montré par les traits pointillés 212 sur cette même figure 3.

La mise en oeuvre du module conforme à l'invention, tel que décrit ci-dessus, va maintenant être explicitée dans ce qui suit. Cette explication va en particulier faire ressortir, d'une part les étapes qui sont communes à la présente invention et à l'enseignement de FR-3 061 227, d'autre part les étapes qui sont distinctives de la présente invention.

En service normal du véhicule, le module I selon la présente invention se trouve dans une configuration fonctionnelle identique à celle du module conforme à FR-3 061 227. En particulier, le ressort 75 rappelle les poulies 50, 51 et 60 dans leur position de repos. Aucune autre action mécanique significative n'est exercée sur les deux éléments d'arbre 2 et 3, lesquels sont globalement immobiles. Par conséquent, ces derniers n'interfèrent pas sur le fonctionnement global de la porte, tout comme les différentes pièces mécaniques qui leur sont associées. La poutre mobile 400 est libre de se déplacer par rapport à la poutre fixe 300, de sorte que la libre ouverture de la porte n'est pas entravée. On notera que, durant ce service normal, le levier 4 est distant de la poulie 50, de sorte qu'il ne coopère pas avec l'encoche 55 ménagée dans cette dernière.

On suppose tout d'abord qu'on veut réaliser une ouverture d'urgence de la porte, équipée du module I selon l'invention. Une telle ouverture d'urgence est mise en oeuvre de la même manière que pour le module antérieur, décrit dans FR-3 061 227. Ainsi un utilisateur actionne la poignée associée à l'une des poulies de commande 50 et 51, ce qui induit un déplacement en translation du câble 52 ou 53. Les trois poulies 50, 51 et 60 sont alors mises en rotation de façon correspondante, ce qui entraîne le déplacement en translation du câble 61 associé à la poulie 60. Dans ces conditions, le déverrouillage de la porte est permis.

On notera tout d'abord que, lors de la rotation de ces poulies, le moyeu 3 est également entraîné en rotation. Durant ce mouvement des poulies et du moyeu, l'essieu central 2 reste fixe, à savoir que le moyeu 3 tourne librement autour de cet essieu. On notera également que, lors de l'étape décrite dans le précédent paragraphe, le levier 4 n'interfère pas avec la poulie 50, à savoir qu'il occupe sa position dite inactive ou encore de libre rotation de cette poulie. Cette libre rotation est matérialisée par la double flèche F50, visible sur la figure 5.

On suppose maintenant qu'on veut réaliser une condamnation de la porte, en raison d'un dysfonctionnement. Cette situation intervient typiquement lorsque le système de contrôle commande du véhicule ne délivre pas une information claire, selon laquelle la porte est fermée et verrouillée. Dans ce cas, comme dans l'enseignement de FR-3 061 227, un membre du personnel de bord actionne la poignée de commande 8, ce qui entraîne une mise en rotation correspondante de l'essieu 2, ainsi que de la pièce rotative 9 selon les flèches F2 et F9 sur la figure 8.

Durant la phase initiale du déplacement de la pièce rotative 9, la bille 212 du poussoir 211 se libère du premier orifice 94, ménagé dans cette pièce 9. Puis, au terme du mouvement de rotation de cette dernière, le deuxième orifice 93 vient en regard du poussoir 211. Le ressort, équipant ce dernier, repousse alors la bille 212 dans le logement, défini par cet orifice 93. La pièce rotative 9 est par conséquent maintenue en place, c'est-à-dire indexée dans cette position active, ce qui est représenté notamment sur la figure 7. Par conséquent la poutre mobile 400 ne peut pas se déplacer vers l'extérieur par rapport à la poutre fixe 300, de sorte que toute tentative d'ouverture de la porte est empêchée.

Les figures 8 et 9 illustrent également une caractéristique essentielle de l'invention, qui distingue le module I vis-à-vis de celui faisant l'objet de FR-3 061 227. Lors de la mise en rotation de l'essieu 2 selon la flèche F2 comme indiqué ci-dessus, la came 22 pivote également autour de l'axe principal de cet essieu selon la flèche F22 visible sur la figure 9. Dans ces conditions, l'excentrique 24 de cette came vient désormais en contact avec la patte 42 du levier, ce qui contribue à déplacer cette dernière en translation selon la flèche F42 représentée sur cette même figure 9. On notera que ce déplacement s'opère à l'encontre du ressort 7, lequel contribue à plaquer la patte 42 contre l'excentrique 24.

Sous l'effet du déplacement de la patte 42, le levier 4 est soumis à un mouvement de balancier autour de son axe A4, selon la flèche F4 sur la figure 9. Dans ces conditions, la cale 41 pénètre dans l'encoche 55, selon la flèche F41 de cette même figure 9. Le levier 4 se trouve désormais dans sa position dite active, permettant le blocage de la poulie 50 et, par conséquent, du jeu de poulies 50, 51 et 60. Ce blocage est matérialisé par la double flèche barrée F'50 sur la figure 9, laquelle doit être comparée avec la flèche F50 représentant la libre rotation des poulies de la figure 5.

Si on suppose désormais qu'un membre du personnel de bord désactive la condamnation de la porte, il manoeuvre la poignée 8 selon un sens de rotation opposé à celui de la flèche F8. Dans ces conditions, l'essieu et par conséquent la came 22 sont mis en rotation selon des sens opposés à ceux des flèches F2 et F22. L'excentrique 24 se retire de la patte 42, laquelle est désormais en contact avec la portion amincie 23. De la sorte le ressort 7 rappelle cette patte vers le haut, en sens inverse de la flèche F42. Cela conduit au pivotement du levier 4 dans le sens horaire, opposé à la flèche F4. La cale 41 se dégage alors de l'encoche 55, de sorte que le dispositif se trouve à nouveau dans sa configuration de libre rotation des poulies, telle que visible sur la figure 5.

L'invention permet d'atteindre les objectifs précédemment mentionnés.

On notera tout d'abord qu'il est du mérite de la demanderesse, d'avoir identifié les inconvénients liés à l'enseignement de FR-3 061 227. Ainsi lorsque le module multifonctionnel, conforme à ce document, se trouve dans une configuration active de condamnation, les moyens d'ouverture d'urgence qui l'équipent peuvent toujours être actionnés. En d'autres termes, cette configuration active de condamnation peut en théorie s'accompagner d'une configuration active d'ouverture d'urgence. En pratique, lorsque le module antérieur assure la condamnation de la porte, un utilisateur reste en capacité d'actionner le déverrouillage d'urgence : la porte peut donc être déverrouillée tout en étant efficacement condamnée.

Dans cette situation opérationnelle exceptionnelle et peu probable, les liaisons mécaniques des vantaux sont réduites du fait de l'absence de verrouillage. Ce défaut de maintien mécanique total des vantaux peut être préjudiciable dans certaines occurrences, par exemple si le véhicule de transport considéré croise un autre véhicule circulant à grande vitesse, ou bien encore si des passagers exercent une force élevée sur l'intérieur du vantail de ce véhicule. Des charges élevées sont alors générées, qui sont susceptibles d'endommager mécaniquement la porte. Ce type de situation est d'autant plus intempestive dans le cas d'une porte dont l'intégrité mécanique n'est pas altérée à l'origine, mais qui se trouve condamnée uniquement du fait d'un défaut électronique/informatique.

Afin de remédier à cet inconvénient l'invention prévoit des moyens dits de désactivation, qui rendent impossible l'ouverture d'urgence dans une configuration de condamnation activée de la porte. Dans l'exemple illustré ces moyens de désactivation comprennent le levier 4 et sa cale de blocage 41, la came 22 permettant de mobiliser ce levier, ainsi que l'encoche 55 de réception de la cale 41. Comme on l'a vu ci-dessus, lors de la condamnation de la porte, les moyens de désactivation sont mobilisés de manière à empêcher la rotation du jeu de poulies. Par conséquent, toute ouverture d'urgence intempestive est évitée, ce qui permet de conserver l'intégrité mécanique de l'ensemble de la porte pendant la durée de l'état condamné.

## Revendications

1. Module multifonctionnel (I) pour porte louvoyante-coulissante d'un véhicule de transport, notamment pour porte de tramway, trolleybus ou train, ladite porte étant mobile entre des positions ouverte et fermée et ledit véhicule comportant un mécanisme de verrouillage de ladite porte dans sa position fermée,
ce module comprenant :
- un carter (1), adapté pour être fixé sur une première pièce de structure solidaire du bâti du véhicule, notamment sur une poutre fixe (300) du mécanisme d'entraînement de ladite porte,
- un arbre (2, 3) monté sur ce carter, cet arbre comprenant un premier élément d'arbre (2) et un deuxième élément d'arbre (3), coaxial avec ledit premier élément d'arbre, chaque élément d'arbre étant monté rotatif autour de son axe principal (A2) sur le carter, lesdits éléments d'arbre présentant un unique degré de liberté en rotation mutuel autour de leur axe principal commun, formant axe principal de l'arbre,
- des premiers moyens (9, 90), dits de condamnation, aptes à coopérer avec le premier élément d'arbre (2), lesdits moyens de condamnation étant aptes à adopter une configuration dite active dans laquelle ils empêchent le passage de la porte de sa position fermée à sa position ouverte, ainsi qu'une configuration dite inactive
- des deuxièmes moyens (50, 51, 60), dits d'ouverture d'urgence, aptes à coopérer avec le deuxième élément d'arbre (3), lesdits moyens d'ouverture d'urgence étant aptes à adopter une configuration dite active dans laquelle ils permettent de déverrouiller ledit mécanisme de verrouillage de ladite porte, ainsi qu'une configuration dite inactive,
ce module étant **caractérisé en ce qu'**il comprend en outre des moyens (4, 22, 55) de désactivation qui sont aptes à maintenir les moyens d'ouverture d'urgence (50, 51, 60) dans leur configuration inactive lorsque les moyens de condamnation (9, 90) se trouvent dans leur configuration active.

2. Module selon la revendication 1, dans lequel les moyens de désactivation sont aptes à provoquer le passage des moyens d'ouverture d'urgence (50, 51, 60), depuis leur configuration active vers leur configuration inactive, sous l'effet du passage des moyens de condamnation (9, 10) de leur configuration inactive vers leur configuration active.

3. Module selon l'une des revendications précédentes, dans lequel les moyens d'ouverture d'urgence comprennent au moins une première poulie (50, 51), dite de commande, solidaire au moins en rotation dudit deuxième élément d'arbre (3), chaque poulie de commande étant associée à un organe de commande propre à être actionné par un utilisateur, et dans lequel les moyens de désactivation (4, 22, 55) comprennent un organe de blocage (4) d'au moins une poulie de commande (50), cet organe de blocage étant mobile entre une position active, c'est-à-dire de blocage dans laquelle il empêche la rotation de la poulie de commande, ainsi qu'une position inactive, c'est-à-dire de libre rotation dans laquelle il ne s'oppose pas à la rotation de cette poulie de commande.

4. Module selon la revendication précédente, dans lequel les moyens de désactivation (4, 22, 55) comprennent une encoche (55) ménagée dans au moins une poulie de commande (50), ledit organe de blocage (4) étant apte à pénétrer dans ladite encoche dans la position active de blocage.

5. Module selon la revendication précédente, dans lequel les moyens de désactivation (4, 22, 55) comprennent une came de mobilisation (22) de l'organe de blocage (4), qui est apte à déplacer l'organe de blocage entre ses positions respectivement active et inactive.

6. Module selon la revendication précédente, comprenant en outre des moyens de rappel, notamment un ressort de rappel (7), permettant de rappeler l'organe de blocage (4) depuis sa position active de blocage vers sa position inactive de libre rotation.

7. Module selon l'une des revendications 5 à 6, dans lequel l'organe de blocage (4) est mobile par rapport au carter (1) à la manière d'un balancier, l'organe de blocage comprenant une première extrémité (42) apte à être mobilisée par la came de mobilisation (22), ainsi qu'une extrémité opposée (41) apte à pénétrer dans l'encoche (55) de la poulie de commande, ces extrémités étant disposées de part et d'autre de l'axe de rotation (A4) de l'organe de blocage par rapport au carter.

8. Module selon la revendication précédente, dans lequel le carter comprend un flasque (13) dit extérieur, une plage (14) prolongeant le flasque extérieur en direction de l'arbre (2, 3), ainsi qu'un rebord (15) formant palier pour l'organe de blocage.

9. Module selon la revendication précédente, prise en combinaison avec la revendication 6, dans lequel l'organe de blocage (4) est solidaire d'un pion (17) monté à rotation dans le rebord, le ressort de rappel (7) étant en partie enroulé autour dudit pion.

10. Module selon l'une des revendications précédentes, dans lequel l'un desdits premier et deuxième éléments d'arbre est monté en position centrale sur le carter et forme un essieu (2), alors que l'autre desdits premier et deuxième éléments d'arbre est creux et forme un moyeu (3), monté à la périphérie dudit essieu.

11. Module selon l'une des revendications précédentes, **caractérisé en ce que** les moyens d'ouverture d'urgence comprennent en outre au moins une autre poulie (60), dite de transmission, solidaire au moins en rotation dudit deuxième élément d'arbre (3), ladite poulie de transmission étant propre à actionner un élément de déverrouillage, de type câble, propre à déverrouiller ledit mécanisme de verrouillage de ladite porte.

12. Véhicule de transport, notamment du type train, tramway ou encore trolleybus, comprenant une caisse, au moins une porte louvoyante coulissante, un ensemble d'entraînement de ladite porte, ainsi qu'au moins un module multifonctionnel (I) conforme à l'une quelconque des revendications précédentes.
